# EUROPÄISCHE PATENTANMELDUNG

(11) **EP 1 078 847 A2**
(43) Veröffentlichungstag der Anmeldung: **28.02.2001**
(21) Anmeldenummer: 00202663.1
(22) Anmeldetag: 26.07.2000
(51) Int. Cl.: B62J 1/18

(54) **Fahrradsattelauflage**

(30) Priorität: 26.08.1999 DE 19941093
(71) Anmelder: Huessmanns, Herbert, 40599 Düsseldorf (DE)
(72) Erfinder: Huessmanns, Herbert, 40599 Düsseldorf (DE)
(74) Vertreter: Ackmann, Günther, Dr.-Ing.

(57) **Zusammenfassung**

Die Erfindung betrifft eine Fahrradsattelauflage 5, welche über einen vorhandenen Fahrradsattel 1 gezogen wird und eine Verbesserung des Fahrkomfort ermöglicht. Erfindungsgemäß ist zur Vermeidung von Druckbelastungen im Genital- und Dammbereich vorgesehen, dass eine Erhöhung 10 zumindest über die gesamte Breite des Fahrradsattel 1 im hinteren Bereich ausgebildet ist, wobei die Erhöhung 10 im Weiteren eine Aussparung 11 aufweist. Durch diese Maßnahme sitzt der Radfahrer mit seinen beiden Sitzbeinhöckern unmittelbar auf der elastisch und verformbaren Erhöhung 10, während der Genital- und Dammbereich keiner Druckbelastung ausgesetzt ist.

## Beschreibung

Die Erfindung betrifft eine Fahrradsattelauflage, insbesondere zum nachträglichen Anbringen auf einem Fahrradsattel, für einen Fahrradsattel mit einer Sitzfläche, deren Oberfläche sich nach vorne in Fahrtrichtung zu einer langgezogenen Nase verjüngt und im druckbelasteten Sitzbereich eine fast ebene Oberfläche aufweist, die mit leichten Wölbungen versehen ist und sich im Außenrandbereich nach unten senkt, wobei die gesamte Oberfläche des Fahrradsattels von der Auflage abgedeckt ist und zumindest ein hinterer Teilbereich eine Erhöhung aufweist.

Allgemein bekannte Fahrradsättel haben eine breite Sitzfläche, die sich nach vorne in Fahrtrichtung zu einer langgezogenen Nase verjüngt, damit der Fahrradfahrer durch Seitendruck mit seinen Oberschenkeln gegen die Seitenflächen dieser Nase eine Fahrstabilität erreicht. Der Sattel weist bei bekannten Ausführungen im vertikalen Druckbereich beim Aufsitzen einer Person eine fast ebene Oberfläche auf, die mit leichten Wölbungen versehen sein kann und sich im Außenrandbereich nach unten absenkt. Auf dieser Oberflächenebene wird beim Aufsitzen jeder Person der Bereich der Genitalien und der Dammbereich anteilmäßig vom Eigengewicht der Person je nach Sattelfüllung oder Oberflächenform mal Stark, mal minder stark mitbelastet.

Durch die US 57 20 618 ist ein Aufsatz für einen Fahrradsattel bekannt, bei dem zwei Kissen unter einer lösbaren Satteldecke in die jeweils gewünschte Position auf dem Sattel geschoben werden können. Hierbei kann die Druckbelastung auf die Genitalien und den Dammbereich individuell beeinflusst werden, wobei jedoch auf Grund der unter die Satteldecke geschobenen Kissen ein nachträgliches Verrutschen nicht verhindert werden kann. Erschwerend kommt hinzu, dass die beiden Kissen jeweils unabhängig voneinander unter der Satteldecke verrutschen können und somit der gewünschte Erfolg nicht eintritt.

Aufgabe der vorliegenden Erfindung ist es eine verbesserte Fahrradsattelauflage zu schaffen, welche leicht montierbar und darüber hinaus einen sicheren Sitz auf dem Fahrradsattel ermöglicht.

Erfindungsgemäß wird die Aufgabe dadurch gelöst, dass zwischen der Auflage und dem Fahrradsattel zumindest teilweise eine Zwischenlage angeordnet ist, welche eine Erhöhung über die ganze Fahrradsattelbreite und im Dammbereich des Fahrers eine Aussparung aufweist, wobei die Erhöhung aus einem elastischen und/oder verformbaren Füllmaterial besteht, dass sich an die Form des vorhandenen Fahrradsattels und das Gesäß des Fahrers anpasst. Dadurch, dass die Erhöhung über die gesamte Fahrradsattelbreite ausgebildet ist wird sichergestellt, dass die Auflage eine feste Position gegenüber dem Fahrradsattel einnimmt und die beiden Sitzbeinhöcker gleichmäßig belastet werden. Als besonders vorteilhaft hat sich hierbei herausgestellt, dass durch eine Erhöhung von 0,5 bis 5 cm, vorzugsweise 2 bis 4 cm, die bestehenden Nachteile bei bekannten Sattelausführungen mit einer unerwünschten Druckbelastung im Genital- und Dammbereich vermieden wird. Die Erhöhung kann in vorteilhafter Weise mit einem elastischen und/oder verformbaren Füllmaterial aufgefüllt sein, wodurch eine individuelle Anpassung an die Gesäßform des Fahrers und des Fahrradsattels ermöglicht wird und aus einer Zwischenlage bestehen, die sich bis zur Sattelnase erstrecken kann.

In Ausgestaltung der Erfindung ist vorgesehen, dass die Aussparung der Erhöhung derart ausgebildet ist, dass zwar die Gesäßknochen auf der Erhöhung aufsitzen, die Genitalien und der Dammbereich jedoch über der Aussparung der Erhöhung liegen, wobei die Aussparung beispielsweise halbkreisförmig, länglich oder dreieckförmig ausgebildet sein kann. Durch die Aussparung, welche großzügig bemessen ist, wird sichergestellt das die wesentliche Druckbelastung durch das Eigengewicht der aufsitzenden Person über die Sitzbeinhöcker auf den Sattel übertragen wird.

In weiterer Ausgestaltung der Erfindung ist vorgesehen, dass die Auflage eine Oberdecke aus Leder, Kunstleder, Kunststoff, Gummi, Textilmaterial, insbesondere wasserdichtem Textilmaterial, und einen Unterboden aufweist.

In einer bevorzugten Ausführungsform kann die Oberdecke und der Unterboden der Auflage kissenförmig geschlossen sein, um einen besonders sicheren Halt der Zwischenlage mit Erhöhung zu gewährleisten. Der hintere Teil kann eine mit einem Reiß-, Klett-, Druck-, Schnürverschluss oder mit elastischen Ösen versehene Öffnung aufweisen, in dem das Füllmaterial sich in einem zusätzlichen geschlossenen formgleichen Kissen der Erhöhung befindet, dass für den Sitzbereich der Erhöhung durch die Öffnung auswechselbar ist. Die Auflage einschließlich der Erhöhung oder das Kissen kann hierbei mit einem Füllmaterial aus Schaumstoff, Latex, Gel, Weichkunststoff, Weichgummi oder anderer zähflüssiger bis knetbarer modellierbarer Stoffe, wie Kunststoffflocken, Reis, Dinkel, Rosshaar, Sand, Dorf oder Sägemehl aufgepolstert sein.

Alternativ ist in besonderer Ausgestaltung der Erfindung vorgesehen, dass die Auflage luftdicht ausgebildet oder zur Aufnahme eines Luftkissens vorgesehen ist, wobei sich am hinteren Rand ein Luftventil befindet, welches für eine Füllung der Auflage mit Luft vorgesehen und der Luftdruck nach individuellem Wunsch des Fahrers variierbar ist. Die Verwendung einer luftdichten Auflage bzw. gegebenenfalls mit Hilfe eines Luftkissens ermöglicht dem Fahrer nach seinen individuellen Vorstellungen die Härte des Luftkissens bzw. der luftdichten Auflage mit Hilfe einer Pumpe zu variieren, sodass ein dem Zweck entsprechend gewähltes Luftpolster gebildet wird.

In weiterer Ausgestaltung der Erfindung ist vorgesehen, dass sich die Zwischenablage vom hinteren Sattelbereich bis zur Nase erstreckt oder ab einer Erhöhung von mehr als 1,5 cm die Zwischenlage nur im Bereich der Erhöhung ausgebildet ist und im restlichen Bereich der Oberfläche sich nur die Auflage aus Unterboden und/oder Oberdecke befindet, wobei ein umlaufender elastischer Aussenrandstreifen ausgebildet ist, welcher in Länge und Breite dehnbar ist, wobei der Außenrandstreifen über den vorhandenen unteren Sattelrand ziehbar ist und durch die elastische Spannung den richtigen Sitz aufweist.

Alternativ besteht die Möglichkeit, dass am Außenrand des Randstreifens ein umlaufender Saum mit darin liegendem Zugband vorhanden ist und das Zugband nach Aufsetzen der Fahrradsattelauflage auf den vorhandenen Sattelrand und Überziehen des Randstreifens bis unter den vorhandenen Sattelrand sich durch eigene Elastizität zusammenzieht oder strammgezogen und verknotbar ist.

Die Befestigung der Auflage auf dem Sattel kann in weiterer Ausgestaltung auch dadurch vorgenommen werden, dass am Außenrand des Randstreifens mehrere elastisch dehnbare Zugbänder mit Haken und Ösen vorhanden sind, wobei die Zugbänder nach Aufsetzen der Auflage auf den vorhandenen Sattel und Überziehen des Randstreifens bis unter den vorhandenen Sattelrand zusammenziehbar und einhängbar oder durch einen Klettverschluss gehalten sind.

Ebenso ist es denkbar, dass ein umlaufender Außenrandstreifen aus dem gleichen Material wie der Unterboden oder der Oberdecke vorgesehen ist, der nach dem losen Aufsetzen der Auflage auf den vorhandenen Fahrradsattel am Sattelrand anliegt und in ausreichender Breite bis unter den Sattelrand führbar und dort mit einer lösbaren Befestigung spannbar ist.

In weiterer Ausgestaltung der Erfindung ist vorgesehen, dass die Auflage nur aus einer bis über den Randbereich gezogenen Oberdecke besteht und dass die aus dem Füllmaterial bestehende Erhöhung in Form eines Kissens oder Formteils unter die Oberdecke schiebbar ist und durch die Oberdecke formschlüssig auf dem Fahrradsattel gehalten ist.

Mit der erfindungsgemäßen Fahrradsattelauflage lässt sich ein vorhandener, allgemein bekannter Fahrradsattel mit Nase unter wirtschaftlichen Gesichtspunkten sinnvoll ergänzen, sodass eine vertikale Belastung im Bereich der Genitalien und dem Dammbereich nicht nur gemindert, sondern vollkommen ausgeschlossen werden kann. Damit lassen sich Gesundheitsschäden vermeiden die laut zahlreicher Arzteberichte beim Radfahren mit einem herkömmlichen Sattel immer wieder auftreten:
- Quetschungen von Nerven und Blutgefäßen, die bei Männern länger anhaltende Potenzstörungen auslösen,
- Taubheitsgefühle im Bereich der Genitalien und im Dammbereich, was bei Männern zeitweise danach auftretende Erektionsstörungen auslöst, die chronisch zur Impotenz führen können.
- Ebenfalls Hals- und Rückenbeschwerden, die durch eine verkrampfe Sitzhaltung verursacht werden.

Durch die erfindungsgemäße Ausführung einer Fahrradsattelauflage mit verschiedenen Füllungen wird einem Radfahrer ermöglicht, sich für seinen speziellen Sattel und seine Fahransprüche (wie beispielsweise Freizeit-, Gelände-, Berg- und Renntouren) eine für die Erhöhung passende ideale Füllung zu wählen. Ferner besteht die Möglichkeit, dass der Radfahrer für seinen Sattel verschiedene Fahrradsattelauflagen mit unterschiedlicher Füllung benutzt, oder gegebenenfalls die einzulegenden Kissen einfach schnell und ohne Werkzeug wechselt. Austauschbare Kissen können sogar bei einer größeren Radtour mit wenig Platzanspruch im Gepäck mitgeführt und je nach Wege- und Geländebeschaffenheit eingesetzt werden. Bei der Wahl einer härteren Füllung, von einem z. B. knetbaren, modellierbaren Stoff oder Sand, besteht der große Vorteil darin, dass durch den vertikalen Druck des Fahrers sich eine ideale, feste und schalenförmige Passform um das Gesäß bildet, wodurch im Zusammenwirken mit dem darunter liegenden vorhandenen Fahrradsattel, der eine dem Anspruch des Fahrers entsprechende Polsterung und Federung aufweist, eine noch bessere Sitz- und Fahrstabilität in Verbindung mit der vorhandenen Sattelnase gegenüber einer weichen, elastischen Füllung erzielt, wobei bei starken Geländeunebenheiten die weichere Füllung gegebenenfalls andere Vorteile aufweist.

Verschiedene Befestigungsarten ermöglichen es im Weiteren die Fahrradsattelauflage mit einem Griff über den unteren Rand des vorhandenen Fahrradsattels zu ziehen, um ihn darunter zu befestigen, etwa durch Spannung auf Grund eigener Elastizität des Außenrandstreifens und durch Zusammenziehen und Verknoten eines Zugbandes in einem Außensaum oder durch Einklinken in Haken und Ösen mit elastischen Zugbändern. Ab einer gewissen Höhe über 1,5 cm der abgestuften Erhöhung kann auf die Füllung im Bereich der Nase des Fahrradsattels verzichtet werden, damit die Erhöhung sich um dieses Maß in der Gesamthöhe verringert,

Einer der wesentlichen Vorteile der Erfindung besteht darin, dass sich die vorherige anteilmäßige und vertikale Drucklast vom Eigengewicht einer Person auf den vorhandenen Sattel vom Mittelachsenbereich durch die Erhöhung nach hinten auf die Sitzfläche der Erhöhung verlagert. Der gefährdete Genital- und der Dammbereich der Person werden jedoch nicht mehr belastet und die Beschwerden treten nicht mehr auf, sodass die Sitzhaltung lockerer wird und keine Verkrampfung besteht.

Das gewohnte Sitz- und Fahrverhalten wird jedoch durch diese Maßnahme nicht geändert, sondern erheblich verbessert. Ein weiterer Vorteil der Fahrradsattelauflage besteht darin, dass der Preis der Auflage bedeutend geringer als der Preis eines neuen nachträglich zu montierenden Sattels ist. Darüber hinaus besteht eine individuelle Anpassung an die jeweiligen Fahrgegebenheiten, die mit unter auch wechselweise wahrgenommen werden können. Demzufolge braucht der vorhandene Sattel nicht gegen einen neuen ausgetauscht zu werden und es fällt keine zusätzliche Entsorgung des Altsattels an. Auf Grund der stabilen Befestigung des Sattels am Fahrrad und seiner Tragfähigkeit, Federung und Polsterung kann er unter Berücksichtigung der erfindungsgemäßen Fahrradsattelauflage weiter verwendet werden, wobei der Fahrradfahrer je nach Wege- und Geländebeschaffenheit oder seinen Fahransprüchen zwischen einer weichen elastischen bis harten Füllung wählen kann, indem er entweder die Fahrradsattelauflage oder gegebenenfalls das Kissen wechselt.

Ein Ausführungsbeispiel der Erfindung wird anhand der Zeichnung dargestellt und im folgenden näher beschrieben.

Es zeigt
- Fig. 1: eine Fahrradsattelauflage mit der Erhöhung in einer Draufsicht, die beispielsweise nach hinten halbkreisförmig ausgespart ist und
- Fig. 2: einen Längsschnitt einer Fahrradsattelauflage mit Erhöhung von mehr als 1 cm gegenüber der übrigen Oberfläche des Sattels.

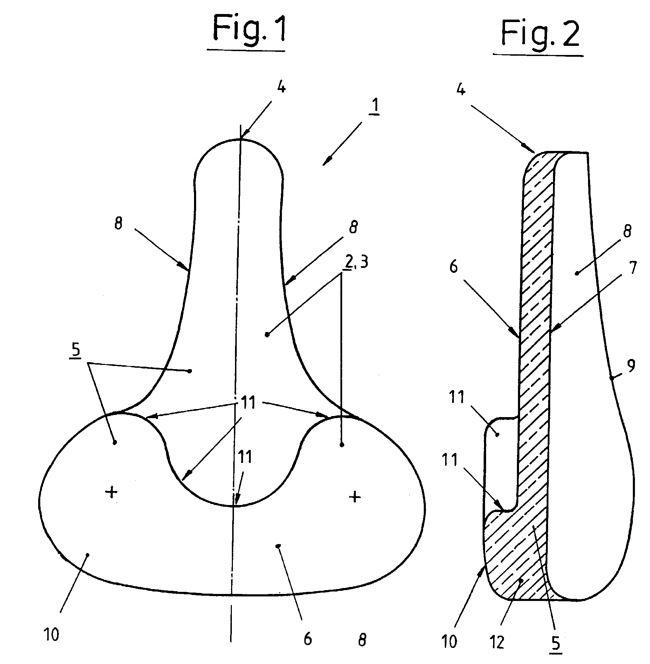

Figur 1 zeigt einen Fahrradsattel 1 in einer Draufsicht mit einer nahezu eben ausgebildeten Oberfläche 2, die die Sitzfläche 3 bildet. Die Sitzfläche 3 ist nach vorne in Fahrtrichtung hin zu einer langgezogenen Nase 4 geformt.

Über die gesamte Sitzfläche 3 ist im Weiteren eine Fahrradsattelauflage 5 gezogen, welche die gesamte Oberfläche 2 des Fahrradsattels 1 mit Oberdecke 6 überzieht, wobei ein Teil des Unterbodens 7 um den abgerundeten Rand 8 des Fahrradsattels 1 herumgeführt ist und mit einem elastischen Band 9 oder gegebenenfalls weiteren Hilfsmitteln befestigt ist. Unterhalb der Oberdecke 6 befindet sich eine Zwischenlage 12, welche sich bis zur Nase 4 erstreckt. Alternativ kann die Zwischenlage 12 auch nur im hinteren Bereich des Fahrradsattels 1 angeordnet sein. Die Fahrradsattelauflage 5 weist im hinteren Bereich des Fahrradsattels 1 eine Erhöhung 10 auf, welche beispielsweise durch eine Aufpolsterung oder ein in die Fahrradsattelauflage 5 eingelegtes Kissen gebildet wird. Die Erhöhung 10 erstreckt sich über die gesamte Breite des Fahrradsattels 1 und weist in Fahrtrichtung eine halbkreisförmige Aussparung 11 auf, sodass der Radfahrer mit seinen beiden Sitzbeinhöckern unmittelbar auf der Erhöhung 10 zu sitzen kommt, während der Genital- und Dammbereich über der Aussparung 11 keine Druckbelastung erfährt.

Die Form der Erhöhung 10 sowie die der Aussparung 11 kann hierbei individuell verändert werden und beispielsweise an die Größe des Fahrradsattels 1 angepasst werden. Im Weiteren besteht die Möglichkeit, dass die Erhöhung 10 unterschiedlich geformt ist oder aus einem Kissen besteht, welches in einer aus der Oberdecke 6 und dem Unterboden 7 gebildeten Tasche durch einen rückwärtigen Reißverschluss oder dergleichen eingelegt wird. Alternativ besteht ebenfalls die Möglichkeit anstelle mit einem elastischen Material gefüllten Kissen ein Luftkissen einzulegen, welches durch ein Ventil gegebenenfalls an die individuellen Wünsche des Fahrradfahrers angepasst werden kann. Im Weiteren besteht die Möglichkeit durch die Öffnung das Füllmaterial als Formteil der Erhöhung 10, bestehend aus einem Material, wie beispielsweise Schaumstoff, Latex, Weichkunststoff und Weichgummi, formgleich einzuschieben.

Figur 2 zeigt den Fahrradsattel 1 in einer Seitenansicht mit der Fahrradsattelauflage 5, wobei in dem gezeigten Ausführungsbeispiel die Fahrradsattelauflage 5 durch ein elastisches Band, welches um die Sitzfläche 3 des Fahrradsattels 1 herumgezogen ist, gehalten wird. Alternativ besteht die Möglichkeit die Oberdecke 6 oder Unterboden 7 bis unterhalb des Fahrradsattels 1 zu ziehen und mit anderen Hilfsmitteln, beispielsweise einem umlaufenden Saum mit Zugband, einem Zugband mit Haken und Ösen oder dergleichen zu befestigen.

### Bezugszeichenliste

- 1: Fahrradsattel
- 2: Oberfläche
- 3: Sitzfläche
- 4: Nase
- 5: Fahrradsattelauflage
- 6: Oberdecke
- 7: Unterboden
- 8: Rand
- 9: Band
- 10: Erhöhung
- 11: Aussparung
- 12: Zwischenlage

## Patentansprüche

1. Fahrradsattelauflage (5), insbesondere zum nachträglichen Anbringen auf einem Fahrradsattel (1), für einen Fahrradsattel (1) mit einer Sitzfläche (3) deren Oberfläche (2) sich nach vorne in Fahrtrichtung zu einer langgezogenen Nase (4) verjüngt und im druckbelasteten Sitzbereich eine fast ebene Oberfläche (2) aufweist, die mit leichten Wölbungen versehen ist und sich im Außenrandbereich (8) nach unten senkt, wobei die gesamte Oberfläche (2) des Fahrradsattels (1) von der Auflage (5) abgedeckt ist und zumindest ein hinterer Teilbereich eine Erhöhung (10) aufweist,
dadurch gekennzeichnet,
dass zwischen der Auflage (5) und dem Fahrradsattel (1) zumindest teilweise eine Zwischenlage (12) angeordnet ist, welche eine Erhöhung (10) über die ganze Fahrradsattelbreite und im Dammbereich des Fahrers eine Aussparung (11) aufweist, wobei die Erhöhung (10) aus einem elastischen und/oder verformbaren Füllmaterial besteht, dass sich an die Form des vorhandenen Fahrradsattels (1) und das Gesäß des Fahrers anpasst.

2. Fahrradsattelauflage nach Anspruch 1,
dadurch gekennzeichnet,
dass die Erhöhung (10) 0,5 bis 5 cm, vorzugsweise 2 bis 4 cm, beträgt.

3. Fahrradsattelauflage nach Anspruch 1 oder 2,
dadurch gekennzeichnet,
dass die Aussparung (11) der Erhöhung (10) derart ausgebildet ist, dass zwar die Gesäßknochen auf der Erhöhung (10) aufsitzen, die Genitalien und der Dammbereich jedoch über der Aussparung (11) der Erhöhung (10) liegen, wobei die Aussparung (11) beispielsweise halbkreisförmig, länglich oder dreieckförmig ausgebildet ist.

4. Fahrradsattelauflage nach Anspruch 1, 2 oder 3,
dadurch gekennzeichnet,
dass die Auflage (5) eine Oberdecke (6) aus Leder, Kunstleder, Kunststoff, Gummi, Textilmaterial, insbesondere wasserdichtem Textilmaterial, und einen Unterboden (7) aufweist.

5. Fahrradsattelauflage nach einem oder mehreren der Ansprüche 1 bis 4,
dadurch gekennzeichnet,
dass die Oberdecke (6) und der Unterboden (7) der Auflage (5) kissenförmig geschlossen sind oder dass der hintere Teil eine mit einem Reiß-, Klett-, Druck-, Schnürverschluss oder mit elastischen Ösen versehene Öffnung aufweist, in dem das Füllmaterial sich in einem zusätzlichen geschlossenen formgleichen Kissen der Erhöhung (10) befindet, dass für den Sitzbereich (3) der Erhöhung (10) durch die Öffnung auswechselbar ist.

6. Fahrradsattelauflage nach wenigstens einem der Ansprüche 1 bis 5,
dadurch gekennzeichnet,
dass die Auflage (5) einschließlich der Erhöhung (10) oder das Kissen mit einem Füllmaterial aus Schaumstoff, Latex, Gel, Weichkunststoff, Weichgummi oder anderer zähflüssiger bis knetbarer modellierbarer Stoffe, Kunststoffflocken, Reis, Dinkel, Rosshaar, Sand, Torf oder Sägemehl aufgepolstert ist.

7. Fahrradsattelauflage nach wenigstens einem der Ansprüche 1 bis 6,
dadurch gekennzeichnet,
dass die Auflage (5) luftdicht ausgebildet oder zur Aufnahme eines Luftkissens vorgesehen ist, wobei sich am hinteren Rand ein Luftventil befindet, welches für eine Füllung der Auflage (5) mit Luft vorgesehen und der Luftdruck nach individuellem Wunsch des Fahrers variierbar ist.

8. Fahrradsattelauflage nach wenigstens einem der Ansprüche 1 bis 7,
dadurch gekennzeichnet,
dass sich die Zwischenablage (12) vom hinteren Sattelbereich bis zur Nase (4) erstreckt oder ab einer Erhöhung (10) von mehr als 1,5 cm die Zwischenlage (12) nur im Bereich der Erhöhung (10) ausgebildet ist und im restlichen Bereich der Oberfläche (2) sich nur die Auflage (5) aus Unterboden (7) und/oder Oberdecke (6) befindet.

9. Fahrradsattelauflage nach wenigstens einem der Ansprüche 1 bis 8,
dadurch gekennzeichnet,
dass ein umlaufender elastischer Außenrandstreifen (8) ausgebildet ist, welcher in Länge und Breite dehnbar ist, wobei der Außenrandstreifen (8) über den vorhandenen unteren Sattelrand ziehbar ist und durch die elastische Spannung den richtigen Sitz aufweist oder dass am Außenrand des Randstreifens (8) ein umlaufender Saum mit darin liegendem Zugband vorhanden ist und das Zugband nach Aufsetzen der Fahrradsattelauflage (5) auf den vorhandenen Sattelrand und Überziehen des Randstreifens (8) bis unter den vorhandenen Sattelrand sich durch eigene Elastizität zusammenzieht oder strammgezogen und verknotbar ist oder dass am Außenrand des Randstreifens (8) mehrere elastisch dehnbare Zugbänder mit Haken und Ösen vorhanden sind, wobei die Zugbänder nach Aufsetzen der Auflage (5) auf den vorhandenen Sattel (1) und Überziehen des Randstreifens (8) bis unter den vorhandenen Sattelrand zusammenziehbar und einhängbar oder durch einen Klettverschluss gehalten sind.

10. Fahrradsattelauflage nach wenigstens einem der Ansprüche 1 bis 9,
dadurch gekennzeichnet,
dass die Auflage (5) nur aus einer bis über den Randbereich gezogenen Oberdecke (6) besteht und dass die aus dem Füllmaterial bestehende Erhöhung (10) in Form eines Kissens oder Formteils unter die Oberdecke (6) schiebbar ist und durch die Oberdecke (6) formschlüssig auf dem Fahrradsattel (1) gehalten ist.
